# EUROPEAN PATENT SPECIFICATION

(11) **EP 4 483 260 B1**
(45) Date of publication and mention of the grant of the patent: **11.03.2026**
(21) Application number: 23706950.5
(22) Date of filing: 20.01.2023
(51) Int. Cl.: G06F 8/60

(54) **REMOTE COMPUTING DEVICE RECOVERY**
WIEDERHERSTELLUNG EINER ENTFERNTEN COMPUTERVORRICHTUNG
RÉCUPÉRATION DE DISPOSITIF INFORMATIQUE À DISTANCE

(30) Priority: 25.02.2022 US 202263268570 P; 19.01.2023 US 202318156721
(43) Date of publication of application: 01.01.2025
(73) Proprietor: QUALCOMM INCORPORATED, San Diego, California 92121-1714 (US)
(72) Inventor: KRISHNAMACHARI, Sridhar, San Diego, California 92121 (US); SUSARLA, Aditya Srikanth, San Diego, California 92121 (US); DOOSE, Michael, San Diego, California 92121 (US); NUNES, Miguel, San Diego, California 92121 (US); HWANG, Paul, San Diego, California 92121 (US); WEBER, Philip, San Diego, California 92121 (US); HUSSEINI, Rami, San Diego, California 92121 (US); BARNETT, Ryan, San Diego, California 92121 (US); KEERTHIPATI, Sarath Chandra Varma, San Diego, California 92121 (US); SIVAPURAM, Saritha, San Diego, California 92121 (US); AFONSO, Sergio Carlos, San Diego, California 92121 (US); MADDOCK, Thomas, San Diego, California 92121 (US)
(74) Representative: Reddie & Grose LLP
(86) International application number: PCT/US2023/061029
(87) International publication number: WO 2023/164336

(56) References cited:
- US-A1- 2012 124 419
- US-B1- 6 839 744

## Description

### FIELD OF THE DISCLOSURE

Aspects of the present disclosure generally relate to wireless communication and to techniques and apparatuses for remote computing device recovery.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP). Other examples of wireless communication technologies that may be implemented in a wireless communication system include Wi-Fi, Wi-Fi Direct, Bluetooth, near field communication (NFC), Zigbee, WiMAX, wireless local area networks (WANs), and/or wireless personal area networks (WPANs), among other examples.

A wireless network may include one or more base stations (e.g., cellular base stations, Wi-Fi routers) that support wireless communication for a user equipment (UE) (or multiple UEs), a computing device (or multiple computing device), and/or another type of wireless communication device. A wireless communication device may communicate with a base station via downlink communications and uplink communications. "Downlink" (or "DL") refers to a communication link from the base station to the wireless communication device, and "uplink" (or "UL") refers to a communication link from the wireless communication device to the base station.

The above wireless communication technologies have been adopted in various telecommunication standards to provide a common protocol that enables different wireless communication device to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

US 6839744 B1 describes systems, methods, computer program products, and combinations and sub-combinations thereof, for enabling web content (as well as other objects) to be loaded on mobile devices (as well as other types of devices), and for users of mobile devices to operate with such web content on their mobile devices in an interactive manner while in an off-line mode.

US 2012/124419 A1 describes a method and apparatus for networked recovery system. In one embodiment, a process is provided to obtain a type of recovery selected by a user. A nonvolatile partition of a storage volume containing a recovery disk image is accessed. The recovery disk image does not include an installation package. If the obtained type of recovery is a predetermined type of recovery, a network connection is established using the recovery disk image and data is downloaded over the network connection for the obtained type of recovery. The obtained type of recovery of the system is performed.

### SUMMARY

The features of the claimed invention are provided in the independent claims, to which reference should now be made. Additional, optional features are provided in the dependent claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example computing device, in accordance with the present disclosure.
Fig. 4 is a diagram illustrating an example server, in accordance with the present disclosure.
Figs. 5 and 6 are diagrams illustrating examples associated with remote computing device recovery, in accordance with the present disclosure.
Figs. 7 and 8 are diagrams illustrating example processes associated with remote computing device recovery, in accordance with the present disclosure.
Figs. 9 and 10 are diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

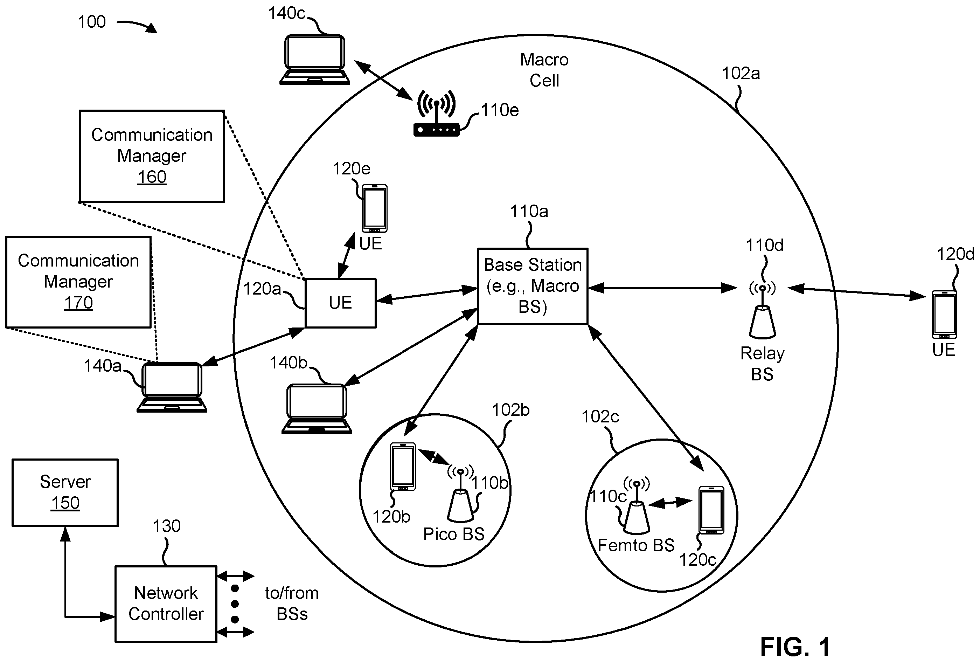

Fig. 1 is a diagram illustrating an example of a wireless network 100, in accordance with the present disclosure. The wireless network 100 may be or may include elements of one or more types of wireless networks, such as a cellular network, a computer network, and/or another type of wireless network. For example, the wireless network 100 may include components and/or devices of a 5G (e.g., NR) network and/or a 4G (e.g., Long Term Evolution (LTE)) network, among other examples. As another example, the wireless network 100 may include components and/or devices of a computer network, such as a local area network (LAN), a wired LAN (WLAN), a wide area network (WAN), and/or a virtual private network (VPN), among other examples. The wireless network 100 may include one or more base stations 110. In some cases, the wireless network 100 includes one or more cellular base stations (shown as a BS 110a, a BS 110b, a BS 110c, and a BS 110d), one or more computer network base stations (shown as BS 110e), and/or one or more other types of base stations. The base stations 110 may communicate with a user equipment (UE) 120 or multiple UEs 120 (shown as a UE 120a, a UE 120b, a UE 120c, a UE 120d, and a UE 120e), with a network controller 130 (or with multiple network controllers 130), with a computing device 140 (or multiple computing devices 140, shown as computing device 140a, computing device 140b, and computing device 140c), and/or other network entities. A cellular base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each cellular base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used. A computer network base station 110 may include a router, a bridge, a hub, a switch, a firewall, and/or another type of computer networking device that communicates with UEs 120 and/or computing devices 140, as well as one or more network controllers 130 included in a computer network.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 and/or computing devices 140 with service subscriptions. A pico cell may cover a relatively small geographic area and may allow unrestricted access by UEs 120 and/or computing devices 140 with service subscription. A femto cell may cover a relatively small geographic area (e.g., a home) and may allow restricted access by UEs 120 and/or computing devices 140 having association with the femto cell (e.g., UEs 120 and/or a computing device 140 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link. In some aspects, one or more network controllers 130 may be included in a core network of a cellular network and may communicate with one or more cellular base stations 110. In some aspects, one or more network controllers 130 may be included in a computer network (e.g., a computer data network) and may communicate with one or more computer network base stations 110.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

As further shown in Fig. 1, one or more computing devices (e.g., computing device 140a, computing device 140b, computing device 140c) may communicate with one or more other devices. For example, the computing device 140a may communicate with a UE 120, a base station 110, and/or a server 150, among other examples. While the computing device 140a is shown as being outside of a coverage area of a base station 110, the computing device 140a alternatively may be located within the coverage area of a base station 110 and communicate with a UE 120. In some aspects, the computing device 140b may communicate with the server 150 through a base station 110 (e.g., a cellular base station 110) and one or more network controllers 130 (e.g., one or more network controllers 130 included in a cellular core network). In some aspects, a UE 120 may communicate with the server 150 through a base station 110 and one or more network controllers 130. In some aspects, the computing device 140c may communicate with the server 150 through a base station 110 (e.g., a computer network base station 110 such as base station 110e) and one or more network controllers 130 (e.g., one or more network controllers 130 included in a computer network).

A computing device described herein may include a personal computer, a laptop, a tablet or another type of electronic user device that includes a boot chain. The boot chain includes firmware that a computing device may use to boot the computing device to an operating configuration that enables an operating system (OS) of the computing device to be loaded. Examples of boot chains include a basic input/output system (BIOS), an extensible firmware interface (EFI), and/or a unified EFI (UEFI), among other examples.

The server 150 may include an enterprise server, an on-premises server (e.g., a server that is located on site or in a data center that managed by an entity), and/or a cloud-based server (e.g., a server located offsite from an entity and provides access to the server via a cloud computing interface), among other examples. Cloud computing refers to network-based on-demand availability of computer system resources, such as data storage and computing power. Cloud computing providers typically offer service according to different service models, including Infrastructure as a Service (IaaS), Platform as a Service (PaaS), and Software as a Service (SaaS). The server 150 may host or store information technology (IT) data, information, and/or electronic files associated with an entity. An entity may include an enterprise, a business, an educational institution, and/or a government entity, among other examples.

In some aspects, the UE 120 may include a communication manager 160. As described in more detail elsewhere herein, the communication manager 160 may establish a connection with the server 150 through the wireless network 100 (e.g., through a base station 110 and/or a network controller 130, among other examples); receive, from the server 150 and via the connection through the wireless network 100, at least one of a firmware image file or a software image file; and transmit at least one of the firmware image file or the software image file to a computing device (e.g., the computing device 140a, the computing device 140b). Additionally, or alternatively, the communication manager 160 may perform one or more other operations described herein.

In some aspects, a computing device 140 may include a communication manager 170. As described in more detail elsewhere herein, the communication manager 170 may receive, from at least one of a UE 120 or the server 150, at least one of a firmware image file or a software image file; and perform a recovery operation for the computing device 140 using at least one of the firmware image file or the software image file. Additionally, or alternatively, the communication manager 170 may perform one or more other operations described herein.

As indicated above, Fig. 1 is provided as an example. Other examples may differ from what is described with regard to Fig. 1.

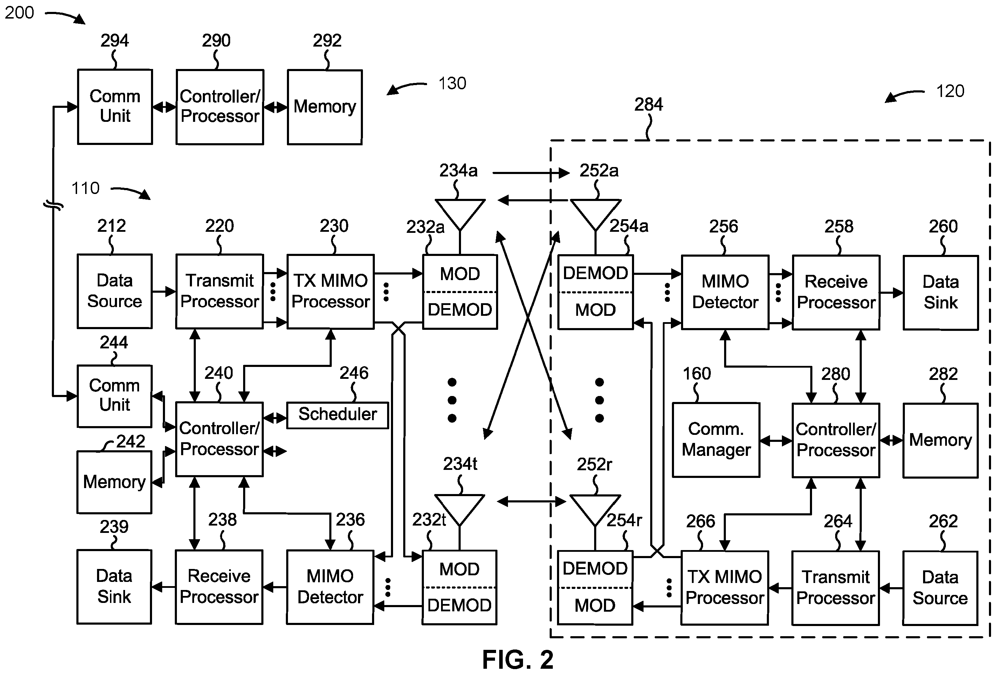

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as R antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., T output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

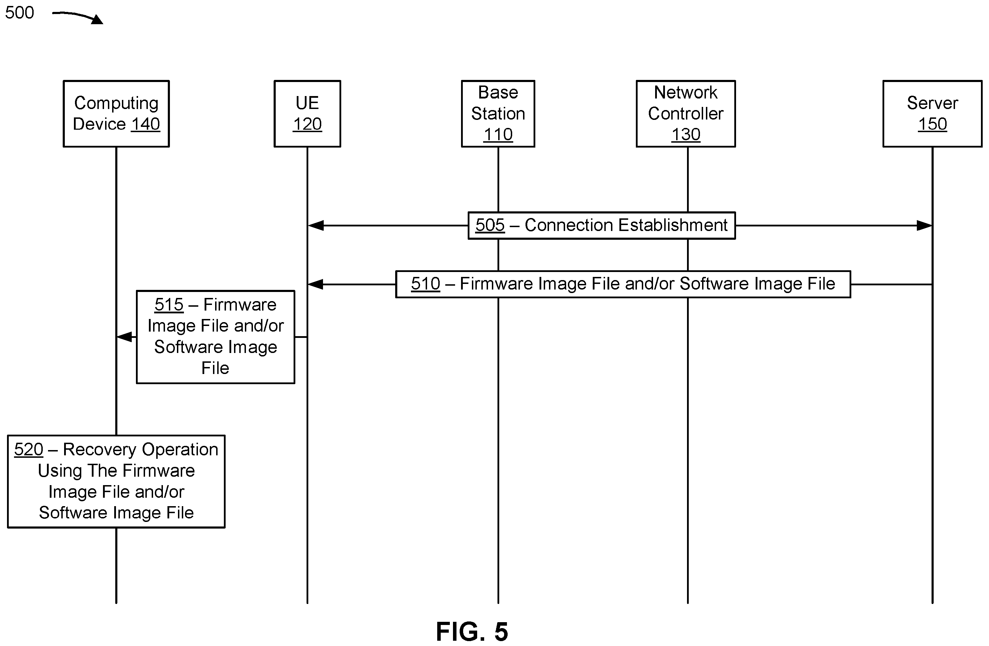

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 5-10).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 5-10).

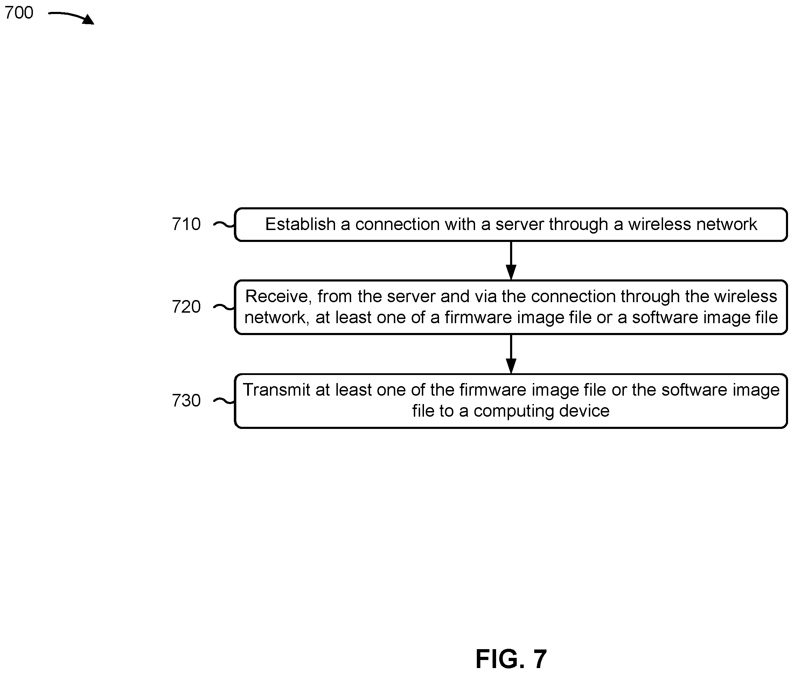

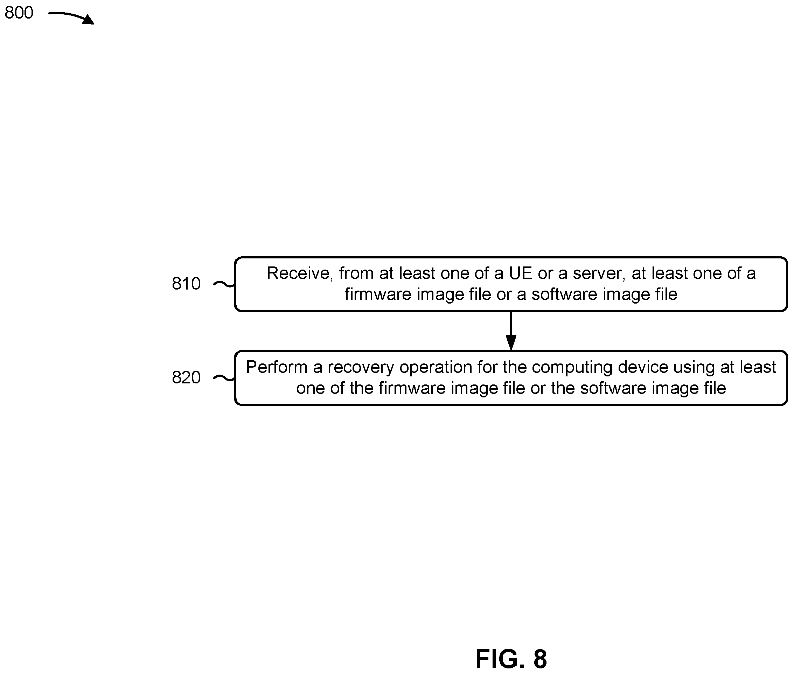

The controller/processor 240 of the base station 110, the controller/processor 280 of the UE 120, and/or any other component(s) of Fig. 2 may perform one or more techniques associated with remote computing device recovery, as described in more detail elsewhere herein. For example, the controller/processor 240 of the base station 110, the controller/processor 280 of the UE 120, and/or any other component(s) of Fig. 2 may perform or direct operations of, for example, process 700 of Fig. 7, process 800 of Fig. 8, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 700 of Fig. 7, process 800 of Fig. 8, and/or other processes as described herein. In some examples, executing instructions may include running the instructions, converting the instructions, compiling the instructions, and/or interpreting the instructions, among other examples.

In some aspects, a UE 120 includes means for establishing a connection with a server 150 through a wireless network 100; means for receiving, from the server 150 and via the connection through the wireless network 100, at least one of a firmware image file or a software image file; and/or means for transmitting at least one of the firmware image file or the software image file to a computing device 140. The means for the UE 120 to perform operations described herein may include, for example, one or more of communication manager 160, antenna 252, modem 254, MIMO detector 256, receive processor 258, transmit processor 264, TX MIMO processor 266, controller/processor 280, or memory 282.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

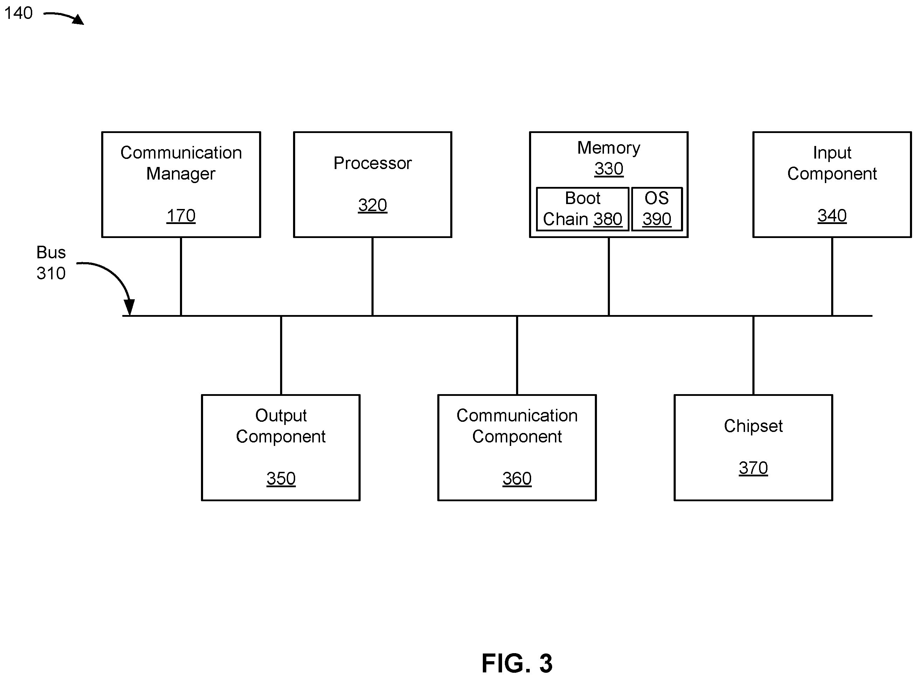

Fig. 3 is a diagram of an example computing device 140, in accordance with the present disclosure. As shown in Fig. 3, the computing device 140 may include a bus 310, a processor 320, a memory 330, an input component 340, an output component 350, a communication component 360, and a chipset 370.

Bus 310 includes one or more components that enable wired and/or wireless communication among the components of the computing device 140. Bus 310 may couple together two or more components of Fig. 3, such as via operative coupling, communicative coupling, electronic coupling, and/or electric coupling. Processor 320 includes a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 includes one or more processors capable of being programmed to perform one or more operations or processes described elsewhere herein.

Memory 330 includes volatile and/or nonvolatile memory. For example, memory 330 may include random access memory (RAM), read only memory (ROM), a hard disk drive, and/or another type of memory (e.g., a flash memory, a magnetic memory, and/or an optical memory). Memory 330 may include internal memory (e.g., RAM, ROM, or a hard disk drive) and/or removable memory (e.g., removable via a universal serial bus connection). Memory 330 may be a non-transitory computer-readable medium. Memory 330 stores information, instructions, and/or software (e.g., one or more software applications) related to the operation of the computing device 140. In some implementations, memory 330 includes one or more memories that are coupled to one or more processors (e.g., processor 320), such as via bus 310. The memory 330 may include multiple memory devices and/or multiple types of memory devices, such as a RAM device, a ROM device, a storage device (e.g., a hard drive or solid state drive (SSD)), a flash memory device, and/or another type of memory device.

Input component 340 enables the computing device 140 to receive input, such as user input and/or sensed input. For example, input component 340 may include a touch screen, a keyboard, a keypad, a mouse, a button, a microphone, a switch, a sensor, a global positioning system sensor, an accelerometer, a gyroscope, and/or an actuator. Output component 350 enables the computing device 140 to provide output, such as via a display, a speaker, and/or a light-emitting diode. Communication component 360 enables the computing device 140 to communicate with other devices via a wired connection and/or a wireless connection. For example, communication component 360 may include a receiver, a transmitter, a transceiver, a modem, a network interface card, and/or an antenna. In some aspects, the computing device 140 includes a plurality of communication components 360, such as a plurality of the components of the UE 120 described above in connection with Fig .2.

The computing device 140 may perform one or more operations or processes described herein. For example, a non-transitory computer-readable medium (e.g., memory 330) may store a set of instructions (e.g., one or more instructions or code) for execution by processor 320. Processor 320 may execute the set of instructions to perform one or more operations or processes described herein. In some implementations, execution of the set of instructions, by one or more processors 320, causes the one or more processors 320 and/or the computing device 140 to perform one or more operations or processes described herein. In some implementations, hardwired circuitry is used instead of or in combination with the instructions to perform one or more operations or processes described herein. Additionally, or alternatively, processor 320 may be configured to perform one or more operations or processes described herein. Thus, implementations described herein are not limited to any specific combination of hardware circuitry and software.

The chipset 370 may include hardware components (e.g., electronic components, integrated circuits) that are configured to manage and/or facilitate the flow of data, information, and/or instructions between one or more other hardware components of the computing device 140 via the bus 310 (e.g., a front-side bus (FSB) and/or another type of bus). For example, the chipset 370 may manage and/or facilitate the flow of data, information, and/or instructions between the communication manager 170, the processor 320, the memory 330, peripherals such as the input component 340 and the output component 350, and/or the communication component 360, among other examples. The chipset 370 may be configured to perform a memory controller function, a graphics controller function, a peripheral component interconnect express (PCIe) controller function, and/or another function.

The chipset 370 may be located on a motherboard of the computing device 140 and/or may be located on another circuit board of the computing device 140. In some aspects, the chipset 370 includes a plurality of electronic components, such as a northbridge and/or a southbridge, among other examples. Alternatively, the chipset 370 may be included in a single electronic component. Additionally and/or alternatively, all or a portion of the functions and/or the hardware of the chipset 370 may be integrated into the processor 320, the memory 330, and/or another component of the component of the computing device 140.

The processor 320, the memory 330, and/or the chipset 370 may perform one or more operations to boot the computing device 140 and/or to load an OS of the computing device 140. Booting (or bootstrapping) refers to a sequence of operations to initialize hardware of the computing device 140, to test the hardware of the computing device 140 (referred to as power-on self-test (POST)), and/or to load portions of an OS into the memory 330 so that the OS can be loaded and executed by the processor 320.

As shown in Fig. 3, a boot chain 380 may be stored in a memory 330 of the computing device 140, such as a ROM, a flash memory, an immutable storage, and/or another type of memory component. The boot chain 380 may include firmware such as a BIOS or a UEFI, among other examples. The processor 320 may execute the boot chain 380 (e.g., directly from the memory 330) to perform a boot sequence to boot the computing device 140. For example, the processor 320 may use the boot chain 380 to perform a POST, to initialize the chipset 370, the communication component 360, and/or peripherals of the computing device 140 (e.g., the input component 340 and/or the output component 350), among other examples. If POST is successful, the processor 320 may continue with loading one or more partition tables so that the processor 320 may use the boot chain 380 to execute a bootloader to load an OS 390 of the computing device 140.

In some aspects, the computing device 140 includes means for receiving, from at least one of a UE 120 or a server 150, at least one of a firmware image file or a software image file; and/or means for performing a recovery operation for the computing device 140 using at least one of the firmware image file or the software image file. In some aspects, the means for the computing device 140 to perform operations described herein may include, for example, one or more of the communication manager 170, the processor 320, the memory 330, the input component 340, the output component 350, the communication component 360, and/or the chipset 370, among other examples.

The number and arrangement of components shown in Fig. 3 are provided as an example. The computing device 140 may include additional components, fewer components, different components, or differently arranged components than those shown in Fig. 3. Additionally, or alternatively, a set of components (e.g., one or more components) of the computing device 140 may perform one or more functions described as being performed by another set of components of the computing device 140.

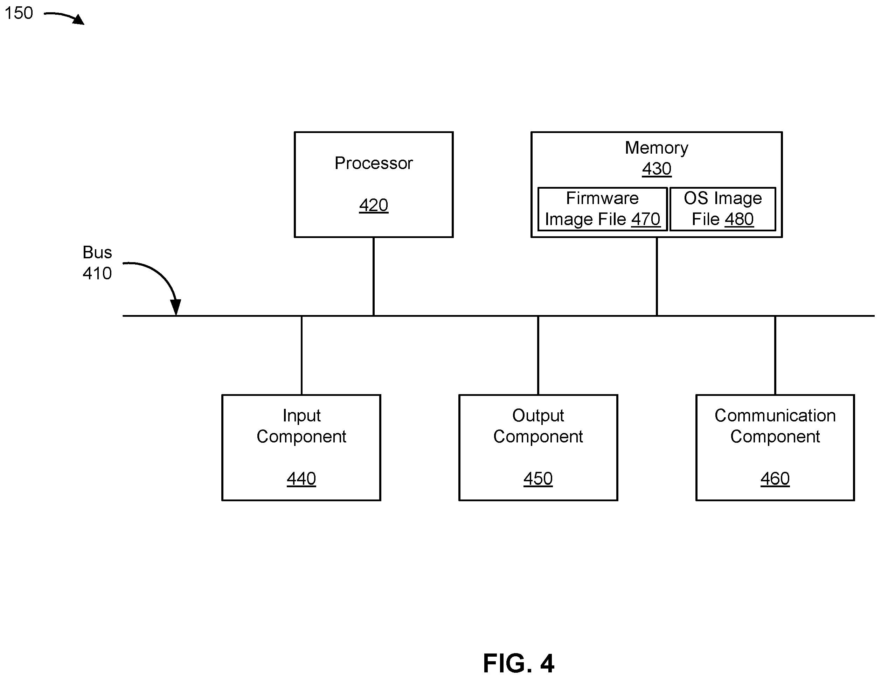

Fig. 4 is a diagram of an example server 150, in accordance with the present disclosure. As shown in Fig. 4, the server 150 may include a bus 410, a processor 420, a memory 430, an input component 440, an output component 450, and a communication component 460.

Bus 410 includes one or more components that enable wired and/or wireless communication among the components of the server 150. Bus 410 may couple together two or more components of Fig. 4, such as via operative coupling, communicative coupling, electronic coupling, and/or electric coupling. Processor 420 includes a central processing unit, a graphics processing unit, a microprocessor, a controller, a microcontroller, a digital signal processor, a field-programmable gate array, an application-specific integrated circuit, and/or another type of processing component. Processor 420 is implemented in hardware, firmware, or a combination of hardware and software. In some implementations, processor 420 includes one or more processors capable of being programmed to perform one or more operations or processes described elsewhere herein.

Memory 430 includes volatile and/or nonvolatile memory. For example, memory 430 may include RAM, ROM, a hard disk drive, and/or another type of memory (e.g., a flash memory, a magnetic memory, and/or an optical memory). Memory 430 may include internal memory (e.g., RAM, ROM, or a hard disk drive) and/or removable memory (e.g., removable via a universal serial bus connection). Memory 430 may be a non-transitory computer-readable medium. Memory 430 stores information, instructions, and/or software (e.g., one or more software applications) related to the operation of the server 150. In some implementations, memory 430 includes one or more memories that are coupled to one or more processors (e.g., processor 420), such as via bus 410.

Input component 440 enables the server 150 to receive input, such as user input and/or sensed input. For example, input component 440 may include a touch screen, a keyboard, a keypad, a mouse, a button, a microphone, a switch, a sensor, a global positioning system sensor, an accelerometer, a gyroscope, and/or an actuator. Output component 450 enables the server 150 to provide output, such as via a display, a speaker, and/or a light-emitting diode. Communication component 460 enables the server 150 to communicate with other devices via a wired connection and/or a wireless connection. For example, communication component 460 may include a receiver, a transmitter, a transceiver, a modem, a network interface card, and/or an antenna.

The server 150 may perform one or more operations or processes described herein. For example, a non-transitory computer-readable medium (e.g., memory 430) may store a set of instructions (e.g., one or more instructions or code) for execution by processor 420. Processor 420 may execute the set of instructions to perform one or more operations or processes described herein. In some implementations, execution of the set of instructions, by one or more processors 420, causes the one or more processors 420 and/or the server 150 to perform one or more operations or processes described herein. In some implementations, hardwired circuitry is used instead of or in combination with the instructions to perform one or more operations or processes described herein. Additionally, or alternatively, processor 420 may be configured to perform one or more operations or processes described herein. Thus, implementations described herein are not limited to any specific combination of hardware circuitry and software.

As described above, the server 150 may be associated with an entity and may store various electronic files (e.g., in the memory 430) associated with the entity. Examples include a firmware image file 470 and/or a software image file 480, among other examples. The firmware image file 470 may include a boot chain image file, a BIOS image file, and/or a UEFI image file, among other examples, that may be used to reimage and/or repair a boot chain of a computing device 140 associated with the entity. A software image file 480 may include an OS image file and/or another type of electronic file (or electronic files) that may be used to reimage and/or repair an OS of a computing device 140 associated with the entity.

The number and arrangement of components shown in Fig. 4 are provided as an example. The server 150 may include additional components, fewer components, different components, or differently arranged components than those shown in Fig. 4. Additionally, or alternatively, a set of components (e.g., one or more components) of the server 150 may perform one or more functions described as being performed by another set of components of the server 150.

In some cases, a computing device may become non-operational. For example, one or more electronic files of a computing device may become corrupt or deleted, which can cause the computing device to be unable to load an OS of the computing device and/or to be unable to boot. A "fully non-operational" computing device, as used herein, refers to a computing device having a non-operational boot chain. A non-operational boot chain may include a boot chain image file that has become corrupt or has been deleted such that a processor of the computing device is unable to execute the boot chain to boot the computing device. A "partially non-operational" computing device, as used herein, refers to a computing device that can load and execute a valid boot chain, but cannot load an OS of the computing device. The OS may be corrupt and/or one or more electronic files of the OS may have been deleted, resulting in the computing device being unable to load and execute the OS.

Typically, when a computing device associated with an entity becomes non-operational, the computing device is taken to an IT service desk of the entity for repair. This can be a time-consuming process, as a user must bring the computing device to the IT service desk, which can result in loss of productivity for the user and loss of productivity for the computing device. Moreover, in some cases, such as in the case where a user is operating remotely with the computing device (e.g., working from home, working remotely, studying off campus), bringing the computing device to the IT service desk may be unfeasible because of travel distance, because of travel restrictions, and/or because of shipping times, for example.

An alternative approach may be to provision an optical disc, a universal serial bus (USB) drive, a Secure Digital (SD) card, or another type of portable storage device with a firmware image file (e.g., a boot chain image file, a BIOS image file, a UEFI image file) and/or a software image file (e.g., an OS image file) and mail the portable storage device to the user so that the user can perform recovery of the computing device using the firmware image file and/or the software image file. However, this too is also time consuming and results in loss of productivity for the computing device (e.g., as delivery of the portable storage device may take days or weeks, in some cases).

Some aspects described herein enable a non-operational computing device (e.g., a non-operational computing device 140) to be recovered remotely without needing to bring the non-operational computing device to an IT service desk of an entity and/or without needing to mail a portable storage device with a firmware image file and/or a software image file. As described herein, a non-operational computing device may communicate with a server (e.g., a server 150) associated with an entity to obtain a firmware image file and/or a software image file through a wireless network (e.g., the wireless network 100). For example, a UE (e.g., a UE 120) may establish a connection with the server via the wireless network and may authenticate with the server using authentication credentials associated with the non-operational computing device. The UE may then receive a firmware image file and/or a software image file from the server through the wireless network, and the UE may provide the firmware image file and/or the software image file to the non-operational computing device using a wired connection or a wireless connection. Alternatively, the non-operational computing device may include wireless communication capabilities, which may be used by a boot chain and/or a chipset (e.g., a chipset 370) of the non-operational computing device to communicate with the server to receive the firmware image file and/or the software image file from the server through the wireless network (e.g., without assistance from a UE).

In this way, a non-operational computing device (e.g., a fully non-operational computing device, a partially non-operational computing device) may be remotely recovered without the need to bring the non-operational computing device to an IT service desk of an entity. This decreases downtime of the non-operational computing device (e.g., from days or weeks down to minutes) which increases the productivity of the non-operational computing device.

Fig. 5 is a diagram illustrating an example 500 associated with remote computing device recovery, in accordance with the present disclosure. As shown in Fig. 5, the example 500 may include communication between a plurality of communication devices. The communication devices may include a computing device 140, a UE 120, as base station 110, a network controller 130, and a server 150.

The computing device 140 may be associated with an entity, such as a business, an enterprise, an educational institution, or a government entity, among other examples. In some aspects, the computing device 140 is an operational computing device. In some aspects, the computing device 140 is a non-operational computing device, such as a fully non-operational computing device or a partially non-operational computing device. In some aspects, the computing device 140 is included in a wireless network, such as the wireless network 100. In some aspects, the computing device 140 is not included or registered in a wireless network, or the computing device 140 is out of a coverage area of a wireless network.

The server 150 may include an on-premises server that is located at a location of the entity (e.g., a data center managed by the entity, an office site of the entity) or a cloud-based server that is hosted off-site from the entity and in a cloud computing environment. The server 150 may store image files for the computing devices of the entity. The image files may include a firmware image file 470, a software image file 480, and/or another type of file that may be used to, image, reimage, or repair a boot chain or an OS of a computing device associated with the entity. The server 150 may be communicatively coupled to a network (e.g., a private network, a secure network) of the entity and may be accessible by the computing device 140 via a secure channel after authentication with the server 150. The secure channel may include a VPN tunnel, a hypertext transport protocol secure (HTTPS) connection, and/or a cloud-based login web portal, among other examples.

Authentication refers to verifying the identity of the computing device 140 and/or verifying the access rights of the computing device 140. For example, authentication credentials (e.g., a security token, a security profile, an entity profile, a security key, a domain certificate, an authentication certificate) may be provisioned to (and stored by) the computing device 140. The authentication credentials may indicate one or more identifiers, associated with the computing device 140, that may be used to verify the identity of the computing device 140. Moreover, the authentication credentials may indicate one or more access permissions for the computing device 140, such as a permission to access the network of the entity and/or a permission to access the image files stored by the server 150.

The UE 120, the base station 110, and the network controller 130 may be included in the wireless network. The UE 120 and the base station 110 may communicate on a wireless access link that includes an uplink and a downlink. The base station 110 and the network controller 130 may communicate on a backhaul link, which may include a wireless link or a wireline link.

The UE 120 and the computing device 140 may communicate on a wireless connection (e.g., a Bluetooth connection, a Wi-Fi Direct connection, or a cellular connection, among other examples) and/or on a wired connection (e.g., a USB connection, an Ethernet connection). The UE 120 and the server 150 may communicate through the wireless network via the base station 110 and/or one or more network controllers 130.

As indicated above, the computing device 140 may include a non-operational computing device. To recover the computing device 140 (e.g., without the use of a portable storage device or bring the computing device 140 to an IT service desk of the entity), the UE 120 may obtain a firmware image file and/or a software image file from the server 150 and may provide the firmware image file and/or the software image file to the computing device 140 so that the computing device 140 may perform a recovery operation using the firmware image file and/or the software image file.

At 505, the UE 120 may establish a connection with the server 150 through the wireless network. For example, the UE 120 may establish a wireless connection with the base station 110, which may include a cellular base station (e.g., where the wireless connection includes a cellular connection such as an LTE connection, a 5G NR connection, or another type of cellular connection), a Wi-Fi router (e.g., where the wireless connection includes a Wi-Fi connection), and/or another type of wireless communication device that communicates with a wireless and/or wired computer network. In some aspects, the UE 120 may initiate a random access channel (RACH) procedure with the base station 110, or may perform another type of connection establishment procedure according to one or more communication protocols (e.g., a Bluetooth protocol, a Wi-Fi protocol). The UE 120 may establish a secure channel with the server 150 via the wireless connection and via the network controller 130. The network controller 130 may include a 5G NR network function device, a gateway, a LAN gateway, a switch, and/or another type of computer network controller. The secure channel may include a VPN tunnel between the UE 120 and the server 150 through the wireless network (e.g., through the base station 110 and/or through the one or more network controllers 130), an HTTPS connection between the UE 120 and the server 150, and/or another type of secure channel.

The UE 120 may be provisioned with an entity profile (e.g., an IT profile, an enterprise profile) associated with the entity and with the computing device 140. The entity profile may be stored by the UE 120 and may include the authentication credentials of the computing device 140. The entity profile enables the UE 120 to authenticate the computing device 140 with the server 150 and to establish the secure channel with the server 150 using the authentication credentials of the computing device 140, which might not otherwise be feasible when the computing device 140 is non-operational. In some aspects, the UE 120 is provisioned with the entity profile prior to the UE 120 being deployed into service. In some aspects, the UE 120 is issued by the entity with a separate entity profile that enables the UE 120 to establish a secure channel with the server 150 to obtain the entity profile of the computing device 140.

At 510, the UE 120 may receive, via the connection through the wireless network, the firmware image file (e.g., firmware image file 470 such as a boot chain image file, a BIOS image file, or a UEFI image file, among other examples) and/or the software image file (e.g., software image file 480 such as an OS image file) from the server 150. In particular, the UE 120 may receive the firmware image file and/or the software image file using the secure channel on the connection with the server 150. In some aspects, the UE 120 and the computing device 140 establish a secure channel (e.g., a VPN tunnel, an HTTPS connection) between the computing device 140 and the server 150 (e.g., via the UE 120, the base station 110, and the one or more network controllers 130). In this way the firmware image file and/or the software image file is transmitted along a fully secure channel from the server 150 to the computing device 140, which increases computer network security in remotely recovering the computing device 140.

At 515, the UE 120 may transmit (and the computing device 140 may receive) the firmware image file and/or the software image file. In some aspects, the UE 120 transmits (and the computing device 140 receives) the firmware image file and/or the software image file to the computing device 140 via a wired connection (e.g., a USB connection, an Ethernet connection) with the computing device 140. In some aspects, the UE 120 transmits (and the computing device 140 receives) the firmware image file and/or the software image file to the computing device 140 via a wireless connection (e.g., a Bluetooth connection, a Wi-Fi connection, a cellular connection) with the computing device 140.

In some aspects, the computing device 140 may use the boot chain 380 of the computing device 140 to receive the firmware image file and/or the software image file. For example, even though the computing device 140 may be fully non-operational, the processor 320 and/or the chipset 370 of the computing device 140 may use the boot chain 380 to access the communication component 360 of the computing device 140. An immutable storage in the memory 330 may be provisioned with a networking protocol stack that is usable by the processor 320 and/or the chipset 370 (e.g., via the boot chain 380) without the need to fully boot the computing device 140. This enables the computing device 140 to receive recovery files (e.g., the firmware image file and/or the software image file) even in cases where the computing device 140 is unable to load and execute a valid boot chain 380.

At 520, the computing device 140 performs a recovery operation using the firmware image file and/or the software image file. This enables the operation of the computing device 140 to be restored without needing to bring the computing device 140 to an IT service desk of the entity and/or without the need of waiting for a portable storage device to be delivered.

In some aspects, where the computing device 140 is a partially non-operational computing device, the UE 120 receives a software image file 480 from the server 150 and transmits the software image file 480 to the computing device 140, which performs the recovery operation to repair or reimage the OS 390 of the computing device 140. In some aspects, where the computing device 140 is a fully non-operational computing device, the UE 120 receives a firmware image file 470 from the server 150 and transmits the firmware image file 470 to the computing device 140, which performs the recovery operation to repair or reimage the boot chain 380 of the computing device 140. In some aspects, where the computing device 140 is a fully non-operational computing device, the UE 120 receives a firmware image file 470 and a software image file 480 from the server 150. Here, the UE 120 transmits the firmware image file 470 and the software image file 480 to the computing device 140. The computing device 140 may perform a first recovery operation to repair or reimage the boot chain 380 using the firmware image file 470, and the computing device 140 may perform a second recovery operation (e.g., after performing the first recovery operation) to repair or reimage the OS 390 using the software image file 480.

As indicated above, Fig. 5 is provided as an example. Other examples may differ from what is described with regard to Fig. 5.

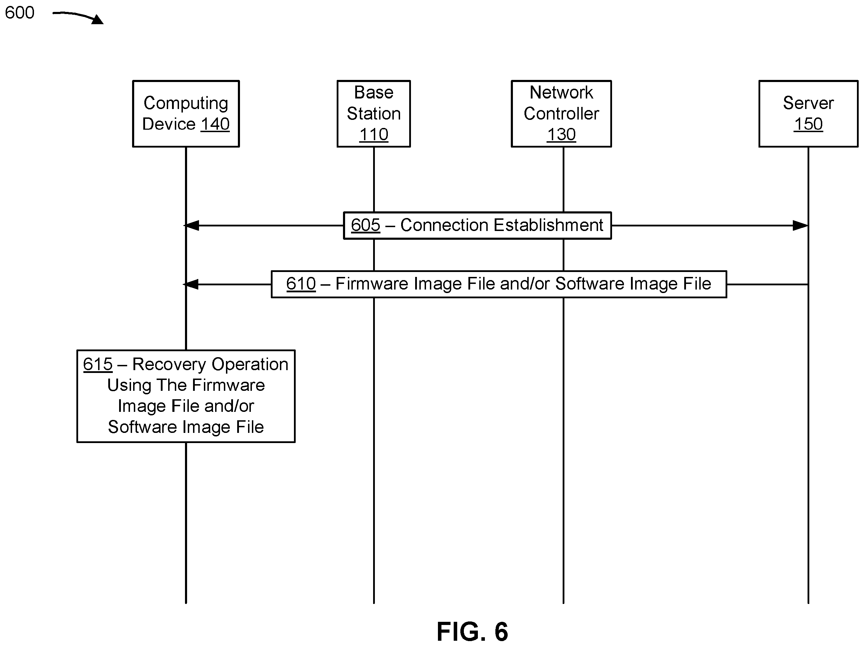

Fig. 6 is a diagram illustrating an example 600 associated with remote computing device recovery, in accordance with the present disclosure. The example 600 includes an alternative implementation to the example 500 in that the computing device 140 communicates with the server 150 through the wireless network (e.g., through the base station 110 and/or the one or more network controllers 130) without assistance from a UE 120 as in the example 500 of Fig. 5.

At 605, the computing device 140 may establish a connection with the server 150 through the wireless network. For example, the communication component 360 of the computing device 140 may include cellular communication functionality, and the computing device 140 may establish a wireless connection with the base station 110 (e.g., the computing device 140 may initiate a RACH procedure with the base station 110). As another example, the computing device 140 may communicate with a computer network base station 110 (e.g., the base station 110e), which may include a Wi-Fi router (e.g., where the wireless connection includes a Wi-Fi connection) and/or another type of wireless communication device that communicates with a wireless and/or wired computer network. The computing device 140 may establish a secure channel with the server 150 via the wireless connection and via the network controller 130. The secure channel may include a VPN tunnel between the computing device 140 and the server 150 through the wireless network (e.g., through the base station 110 and/or through the one or more network controllers 130), an HTTPS connection between the computing device 140 and the server 150, and/or another type of secure channel.

Alternatively, the computing device 140 may establish another type of wireless connection to connect with the server 150 through the wireless network. For example, the computing device 140 may establish a Wi-Fi connection with a cellular modem, and the cellular modem may establish a cellular connection with the base station 110.

The computing device 140 may be provisioned with an entity profile (e.g., an IT profile, an enterprise profile) associated with the entity and with the computing device 140. The entity profile may be stored by the computing device 140 and may include the authentication credentials of the computing device 140. The entity profile enables the computing device 140 to authenticate the computing device 140 with the server 150 and to establish the secure channel with the server 150 using the authentication credentials of the computing device 140.

At 610, the computing device 140 may receive, via the connection through the wireless network, the firmware image file (e.g., firmware image file 470 such as a boot chain image file, a BIOS image file, or a UEFI image file, among other examples) and/or the software image file (e.g., software image file 480 such as an OS image file) from the server 150. In particular, the computing device 140 may receive the firmware image file and/or the software image file using the secure channel on the connection with the server 150.

In some aspects, the computing device 140 may use the boot chain 380 of the computing device 140 to receive the firmware image file and/or the software image file. For example, even though the computing device 140 may be fully non-operational, the processor 320 and/or the chipset 370 of the computing device 140 may use the boot chain 380 to access the communication component 360 of the computing device 140. An immutable storage in the memory 330 may be provisioned with a networking protocol stack that is usable by the processor 320 and/or the chipset 370 (e.g., via the boot chain 380) without the need to fully boot the computing device 140. This enables the computing device 140 to receive recovery files (e.g., the firmware image file and/or the software image file) even in cases where the computing device 140 is unable to load and execute a valid boot chain 380.

At 615, the computing device 140 performs a recovery operation using the firmware image file and/or the software image file. This enables the operation of the computing device 140 to be restored without needing to bring the computing device 140 to an IT service desk of the entity and/or without the need of waiting for a portable storage device to be delivered.

In some aspects, where the computing device 140 is a partially non-operational computing device, the computing device 140 receives a software image file 480 from the server 150 and performs the recovery operation to repair or reimage the OS 390 of the computing device 140. In some aspects, where the computing device 140 is a fully non-operational computing device, the computing device 140 receives a firmware image file 470 from the server 150 and performs the recovery operation to repair or reimage the boot chain 380 of the computing device 140. In some aspects, where the computing device 140 is a fully non-operational computing device, the computing device 140 receives a firmware image file 470 and a software image file 480 from the server 150. Here, the computing device 140 may perform a first recovery operation to repair or reimage the boot chain 380 using the firmware image file 470, and the computing device 140 may perform a second recovery operation (e.g., after performing the first recovery operation) to repair or reimage the OS 390 using the software image file 480.

As indicated above, Fig. 6 is provided as an example. Other examples may differ from what is described with regard to Fig. 6.

Fig. 7 is a diagram illustrating an example process 700 performed, for example, by a UE, in accordance with the present disclosure. Example process 700 is an example where the UE (e.g., UE 120) performs operations associated with remote computing device recovery.

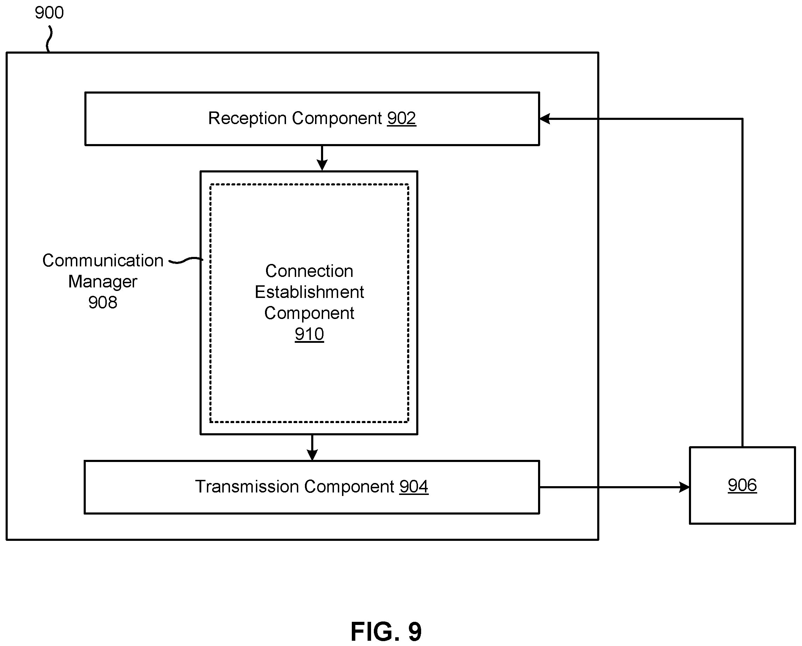

As shown in Fig. 7, in some aspects, process 700 may include establishing a connection with a server through a wireless network (block 710). For example, the UE (e.g., using communication manager 160, communication manager 908, and/or connection establishment component 910, depicted in Fig. 9) may establish a connection with a server through a wireless network, as described above.

As further shown in Fig. 7, in some aspects, process 700 may include receiving, from the server and via the connection through the wireless network, at least one of a firmware image file or a software image file (block 720). For example, the UE (e.g., using communication manager 160, communication manager 908, and/or reception component 902, depicted in Fig. 9) may receive, from the server and via the connection through the wireless network, at least one of a firmware image file or a software image file, as described above.

As further shown in Fig. 7, in some aspects, process 700 may include transmitting at least one of the firmware image file or the software image file to a computing device (block 730). For example, the UE (e.g., using communication manager 160 and/or transmission component 904, depicted in Fig. 9) may transmit at least one of the firmware image file or the software image file to a computing device, as described above.

Process 700 may include additional aspects, such as any single aspect or any combination of aspects described below and/or in connection with one or more other processes described elsewhere herein.

In a first aspect, the computing device comprises a fully non-operational computing device having a non-operational boot chain, wherein receiving at least one of the firmware image file or the software image file comprises receiving the firmware image file, wherein the firmware image file comprises a boot chain image file, and wherein transmitting at least one of the firmware image file or the software image file to the computing device comprises transmitting the boot chain image file to the computing device.

In a second aspect, alone or in combination with the first aspect, process 700 includes receiving, from the server and via the connection through the wireless network, the software image file, and transmitting the software image file to the computing device after transmitting the firmware image file to the computing device.

In a third aspect, alone or in combination with one or more of the first and second aspects, the computing device comprises a partially non-operational computing device that can load a valid boot chain of the computing device but not an OS of the computing device, wherein receiving at least one of the firmware image file or the software image file comprises receiving the software image file, wherein the software image file comprises an image file of the OS, and wherein transmitting at least one of the firmware image file or the software image file to the computing device comprises transmitting the software image file to the computing device.

In a fourth aspect, alone or in combination with one or more of the first through third aspects, transmitting the software image file to the computing device comprises communicating with the boot chain of the computing device to transmit the software image file to the computing device.

In a fifth aspect, alone or in combination with one or more of the first through fourth aspects, transmitting the software image file to the computing device comprises transmitting, via a wireless connection, the software image file to the computing device.

In a sixth aspect, alone or in combination with one or more of the first through fifth aspects, transmitting the software image file to the computing device comprises transmitting, via a wired connection, the software image file to the computing device.

In a seventh aspect, alone or in combination with one or more of the first through sixth aspects, establishing the connection with the server comprises obtaining an authentication certificate associated with the computing device, and authenticating the computing device with the server using the authentication certificate.

In an eighth aspect, alone or in combination with one or more of the first through seventh aspects, the authentication certificate is included in an entity profile, associated with the computing device, that is stored on the UE.

In a ninth aspect, alone or in combination with one or more of the first through eighth aspects, the server comprises a cloud-based server, and wherein establishing the connection with the server comprises authenticating the UE with the server using an authentication certificate associated with the UE.

In a tenth aspect, alone or in combination with one or more of the first through ninth aspects, the server comprises an on-premises server, and wherein establishing the connection with the server comprises establishing a secure channel between the UE and the on-premises server.

In an eleventh aspect, alone or in combination with one or more of the first through tenth aspects, receiving at least one of the firmware image file or the software image file comprises receiving at least one of the firmware image file or the software image file through the secure channel.

In a twelfth aspect, alone or in combination with one or more of the first through eleventh aspects, process 700 includes establishing the secure channel between the computing device and the on-premises server via the UE, and wherein transmitting at least one of the firmware image file or the software image file to the computing device comprises transmitting at least one of the firmware image file or the software image file to the computing device through the secure channel.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram illustrating an example process 800 performed, for example, by a computing device, in accordance with the present disclosure. Example process 800 is an example where the computing device (e.g., computing device 140) performs operations associated with remote computing device recovery.

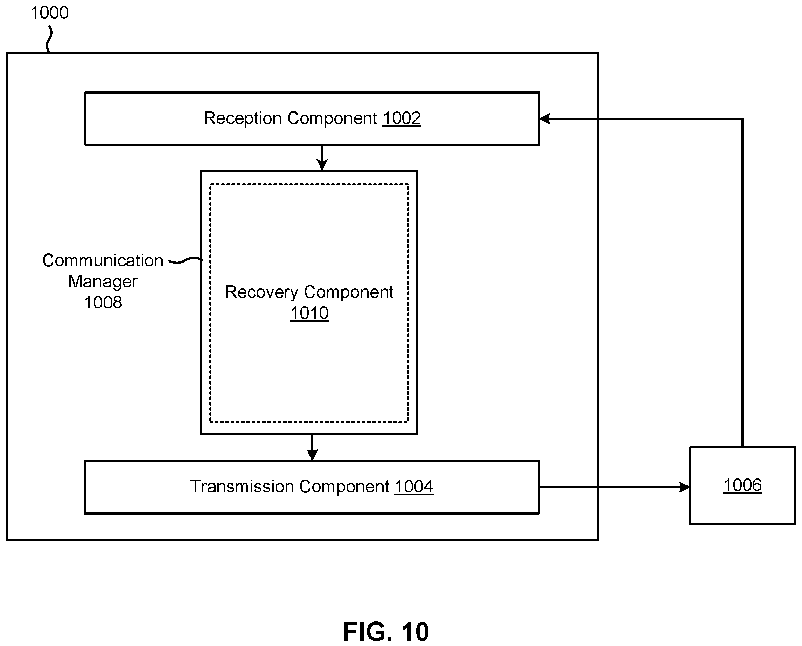

As shown in Fig. 8, in some aspects, process 800 may include receiving, from at least one of a UE or a server, at least one of a firmware image file or a software image file (block 810). For example, the computing device (e.g., using communication manager 170, communication manager 1008, and/or reception component 1002, depicted in Fig. 10) may receive, from at least one of a UE or a server, at least one of a firmware image file or a software image file, as described above.

As further shown in Fig. 8, in some aspects, process 800 may include performing a recovery operation for the computing device using at least one of the firmware image file or the software image file (block 820). For example, the computing device (e.g., using communication manager 170, communication manager 1008, and/or recovery component 1010, depicted in Fig. 10) may perform a recovery operation for the computing device using at least one of the firmware image file or the software image file, as described above.

Process 800 may include additional aspects, such as any single aspect or any combination of aspects described below and/or in connection with one or more other processes described elsewhere herein.

In a first aspect, the computing device comprises a fully non-operational computing device having a non-operational boot chain, wherein receiving at least one of the firmware image file or the software image file comprises receiving the firmware image file, wherein the firmware image file comprises a boot chain image file, and wherein performing the recovery operation comprises repairing the boot chain using the boot chain image file.

In a second aspect, alone or in combination with the first aspect, process 800 includes receiving, from at least one of the UE or the server, the software image file, and performing another recovery operation for the computing device using the software image file, wherein the other recovery operation comprises at least one of repairing an OS of the computing device using the software image file, or reimaging the OS of the computing device using the software image file.

In a third aspect, alone or in combination with one or more of the first and second aspects, process 800 includes repairing an OS of the computing device after performing the recovery operation.

In a fourth aspect, alone or in combination with one or more of the first through third aspects, the computing device comprises a partially non-operational computing device that can load a valid boot chain of the computing device but not an OS of the computing device, wherein receiving at least one of the firmware image file or the software image file comprises receiving the software image file from the UE, wherein the software image file comprises an image file of the OS, and wherein performing the recovery operation comprises at least one of repairing an OS of the computing device using the software image file, or reimaging the OS of the computing device using the software image file.

In a fifth aspect, alone or in combination with one or more of the first through fourth aspects, receiving at least one of the firmware image file or the software image file comprises receiving at least one of the firmware image file or the software image file from the server via the UE.

In a sixth aspect, alone or in combination with one or more of the first through fifth aspects, receiving at least one of the firmware image file or the software image file comprises establishing a connection with the server through a wireless network, and receiving at least one of the firmware image file or the software image file from the server via the connection through a wireless network.

In a seventh aspect, alone or in combination with one or more of the first through sixth aspects, the server comprises a cloud-based server, and wherein establishing the connection with the server comprises obtaining an authentication certificate associated with the computing device, and authenticating the computing device with the cloud-based server using the authentication certificate.

In an eighth aspect, alone or in combination with one or more of the first through seventh aspects, the server comprises an on-premises server, and wherein establishing the connection with the server comprises establishing a secure channel between the computing device and the on-premises server.

In a ninth aspect, alone or in combination with one or more of the first through eighth aspects, receiving at least one of the firmware image file or the software image file comprises receiving at least one of the firmware image file or the software image file through the secure channel.

In a tenth aspect, alone or in combination with one or more of the first through ninth aspects, receiving at least one of the firmware image file or the software image file comprises receiving, from at least one of the UE or the server, at least one of the firmware image file or the software image file using at least one of a wired communication interface of the computing device or a wireless communication interface of the computing device.

In an eleventh aspect, alone or in combination with one or more of the first through tenth aspects, receiving at least one of the firmware image file or the software image file comprises using a boot chain of the computing device to communicate with a wireless communication interface that receives at least one of the firmware image file or the software image file.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram of an example apparatus 900 for wireless communication. The apparatus 900 may be a UE (e.g., a UE 120), or a UE may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, a server, or another communication device) using the reception component 902 and the transmission component 904. As further shown, the apparatus 900 may include the communication manager 908, which may include or may be included in the communication manager 160. The communication manager 908 may include a connection establishment component 910, among other examples.

In some aspects, the apparatus 900 may be configured to perform one or more operations described herein in connection with Figs. 5 and/or 6. Additionally, or alternatively, the apparatus 900 may be configured to perform one or more processes described herein, such as process 700 of Fig. 7. In some aspects, the apparatus 900 and/or one or more components shown in Fig. 9 may include one or more components of the UE described in connection with Fig. 2. Additionally, or alternatively, one or more components shown in Fig. 9 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 900. In some aspects, the reception component 902 may include one or more antennas, a modem, a demodulator, a MIMO detector, a receive processor, a controller/processor, a memory, or a combination thereof, of the UE described in connection with Fig. 2.

The transmission component 904 may transmit communications, such as reference signals, control information, data communications, or a combination thereof, to the apparatus 906. In some aspects, one or more other components of the apparatus 900 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modem, a modulator, a transmit MIMO processor, a transmit processor, a controller/processor, a memory, or a combination thereof, of the UE described in connection with Fig. 2. In some aspects, the transmission component 904 may be co-located with the reception component 902 in a transceiver.

The connection establishment component 910 may establish a connection with a server (e.g., an apparatus 906) through a wireless network. The reception component 902 may receive, from the server (e.g., the apparatus 906) and via the connection through the wireless network, at least one of a firmware image file or a software image file. The transmission component 904 may transmit at least one of the firmware image file or the software image file to a computing device (e.g., another apparatus 906).

The reception component 902 may receive, from the server (e.g., the apparatus 906) and via the connection through the wireless network, the software image file.

The transmission component 904 may transmit the software image file to the computing device (e.g., the other apparatus 906) after transmitting the firmware image file to the computing device (e.g., the other apparatus 906).

The connection establishment component 910 may establish a secure channel such as a VPN tunnel between the computing device (e.g., the other apparatus 906) and an on-premises server (e.g., the apparatus 906) via the apparatus 900.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 9.

Fig. 10 is a diagram of an example apparatus 1000 for wireless communication. The apparatus 1000 may be a computing device (e.g., a computing device 140), or a computing device may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE, a base station, a server, or another communication device) using the reception component 1002 and the transmission component 1004. As further shown, the apparatus 1000 may include a communication manager 1008, which may include or may be included in the communication manager 170. The communication manager 1008 may include a recovery component 1010, among other examples.

In some aspects, the apparatus 1000 may be configured to perform one or more operations described herein in connection with Figs. 6 and/or 7. Additionally, or alternatively, the apparatus 1000 may be configured to perform one or more processes described herein, such as process 800 of Fig. 8. In some aspects, the apparatus 1000 and/or one or more components shown in Fig. 10 may include one or more components of the computing device described in connection with Fig. 3. Additionally, or alternatively, one or more components shown in Fig. 10 may be implemented within one or more components described in connection with Fig. 3. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1000. In some aspects, the reception component 1002 may include a bus and/or a communication interface described in connection with Fig. 3.

The transmission component 1004 may transmit communications, such as reference signals, control information, data communications, or a combination thereof, to the apparatus 1006. In some aspects, one or more other components of the apparatus 1000 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include a bus and/or a communication interface described in connection with Fig. 3. In some aspects, the transmission component 1004 may be co-located with the reception component 1002 in a transceiver.

The reception component 1002 may receive, from the apparatus 1006 (e.g., at least one of a UE or a server), at least one of a firmware image file or a software image file. The recovery component 1010 may perform a recovery operation for the apparatus 1000 using at least one of the firmware image file or the software image file.

The reception component 1002 may receive, from the apparatus 1006 (e.g., at least one of the UE or the server), the software image file.

The recovery component 1010 may perform another recovery operation for the apparatus 1000 using the software image file. The recovery operation may include at least one of repairing an OS of the apparatus 1000 using the software image file or reimaging the OS of the apparatus 1000 using the software image file.

The recovery component 1010 may repair an OS of the apparatus 1000 after performing the recovery operation.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally, or alternatively, a set of (one or more) components shown in Fig. 10 may perform one or more functions described as being performed by another set of components shown in Fig. 10.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method (700) of wireless communication performed by a user equipment, UE, for transmitting at least one of a firmware image file or a software image file to a computing device, the computing device comprising a computing device having a non-operational boot chain or a partially non-operational computing device that can load a valid boot chain of the computing device but not an operating system, OS, of the computing device, the method comprising:
establishing (710) a connection with a server through a wireless network;
receiving (720), from the server and via the connection through the wireless network, at least one of a firmware image file for performing a recovery operation to repair or reimage the boot chain or a software image file for performing a recovery operation to repair or reimage the OS; and
transmitting (730) at least one of the firmware image file or the software image file to the computing device.

2. The method (700) of claim 1, wherein the computing device comprises the computing device having a non-operational boot chain;
wherein receiving at least one of the firmware image file or the software image file comprises:
receiving the firmware image file,
wherein the firmware image file comprises a boot chain image file; and
wherein transmitting at least one of the firmware image file or the software image file to the computing device comprises:
transmitting the boot chain image file to the computing device.

3. The method (700) of claim 2, further comprising:
receiving, from the server and via the connection through the wireless network, the software image file; and
transmitting the software image file to the computing device after transmitting the firmware image file to the computing device.

4. The method (700) of claim 1, wherein the computing device comprises the partially non-operational computing device that can load a valid boot chain of the computing device but not an operating system, OS, of the computing device;
wherein receiving at least one of the firmware image file or the software image file comprises:
receiving the software image file,
wherein the software image file comprises an image file of the OS; and
wherein transmitting at least one of the firmware image file or the software image file to the computing device comprises:
transmitting the software image file to the computing device.

5. The method (700) of claim 4, wherein transmitting the software image file to the computing device comprises:
communicating with the boot chain of the computing device to transmit the software image file to the computing device.

6. The method (700) of claim 4, wherein transmitting the software image file to the computing device comprises:
transmitting, via a wireless connection, the software image file to the computing device.

7. The method (700) of claim 4, wherein transmitting the software image file to the computing device comprises:
transmitting, via a wired connection, the software image file to the computing device.

8. A user equipment, UE, (120) for wireless communication for transmitting at least one of a firmware image file or a software image file to a computing device, the computing device comprising a computing device having a non-operational boot chain or a partially non-operational computing device that can load a valid boot chain of the computing device but not an operating system, OS, of the computing device, the UE comprising:
a memory; and
one or more processors, coupled to the memory, configured to:
establish (710) a connection with a server through a wireless network;
receive (720), from the server and via the connection through the wireless network, at least one of a firmware image file for performing a recovery operation to repair or reimage the boot chain or a software image file for performing a recovery operation to repair or reimage the OS; and
transmit (730) at least one of the firmware image file or the software image file to a computing device.

9. The UE (120) of claim 8, wherein the one or more processors, to establish the connection with the server, are configured to:
obtain an authentication certificate associated with the computing device; and
authenticate the computing device with the server using the authentication certificate.

10. The UE (120) of claim 9, wherein the authentication certificate is included in an entity profile, associated with the computing device, that is stored on the UE.

11. The UE (120) of claim 8, wherein the server comprises a cloud-based server; and
wherein the one or more processors, to establish the connection with the server, are configured to:
authenticate the UE with the server using an authentication certificate associated with the UE.

12. The UE (120) of claim 8, wherein the server comprises an on-premises server; and
wherein the one or more processors, to establish the connection with the server, are configured to:
establish a secure channel between the UE and the on-premises server.

13. The UE (120) of claim 12, wherein the one or more processors, to receive at least one of the firmware image file or the software image file, are configured to:
receive at least one of the firmware image file or the software image file through the secure channel.

14. The UE (120) of claim 12, wherein the one or more processors are further configured to:
establish the secure channel between the computing device and the on-premises server via the UE; and
wherein the one or more processors, to transmit at least one of the firmware image file or the software image file to the computing device, are configured to:
transmit at least one of the firmware image file or the software image file to the computing device through the secure channel.

## Patentansprüche

1. Verfahren (700) zur drahtlosen Kommunikation, durchgeführt von einem UE (User Equipment), zum Übertragen einer Firmware-Image-Datei und/oder einer Software-Image-Datei zu einem Rechengerät, wobei das Rechengerät ein Rechengerät mit einer nicht-operativen Bootchain oder ein teilweise nicht-operatives Rechengerät umfasst, das eine gültige Bootchain des Rechengeräts, jedoch kein OS (Operating System) des Rechengeräts laden kann, wobei das Verfahren Folgendes beinhaltet:
Herstellen (710) einer Verbindung mit einem Server über ein drahtloses Netzwerk;
Empfangen (720), von dem Server und über die Verbindung über das drahtlose Netzwerk, einer Firmware-Image-Datei zum Durchführen eines Wiederherstellungsvorgangs zum Reparieren oder Neuabbilden der Bootchain und/oder einer Software-Image-Datei zum Durchführen eines Wiederherstellungsvorgangs zum Reparieren oder Neuabbilden des OS; und
Übertragen (730) der Firmware-Image-Datei und/oder der Software-Image-Datei zu dem Rechengerät.

2. Verfahren (700) nach Anspruch 1, wobei das Rechengerät das Rechengerät mit einer nicht-operativen Bootchain umfasst;
wobei das Empfangen der Firmware-Image-Datei und/oder der Software-Image-Datei Folgendes beinhaltet:
Empfangen der Firmware-Image-Datei,
wobei die Firmware-Image-Datei eine Bootchain-Image-Datei umfasst; und
wobei das Übertragen der Firmware-Image-Datei und/oder der Software-Image-Datei zu dem Rechengerät Folgendes beinhaltet:
Übertragen der Bootchain-Image-Datei zu dem Rechengerät.

3. Verfahren (700) nach Anspruch 2, das ferner Folgendes beinhaltet:
Empfangen der Software-Image-Datei vom Server über die Verbindung durch das drahtlose Netzwerk; und
Übertragen der Software-Image-Datei zu dem Rechengerät nach dem Übertragen der Firmware-Image-Datei zu dem Rechengerät.

4. Verfahren (700) nach Anspruch 1, wobei das Rechengerät das teilweise nicht-operative Rechengerät umfasst, das eine gültige Bootchain des Rechengeräts, jedoch kein OS (Operating System) des Rechengeräts laden kann;
wobei das Empfangen der Firmware-Image-Datei und/oder der Software-Image-Datei Folgendes beinhaltet:
Empfangen der Software-Image-Datei,
wobei die Software-Image-Datei eine Image-Datei des OS umfasst; und
wobei das Übertragen der Firmware-Image-Datei und/oder der Software-Image-Datei zu dem Rechengerät Folgendes beinhaltet:
Übertragen der Software-Image-Datei zu dem Rechengerät.

5. Verfahren (700) nach Anspruch 4, wobei das Übertragen der Software-Image-Datei zu dem Rechengerät Folgendes beinhaltet:
Kommunizieren mit der Bootchain des Rechengeräts, um die Software-Image-Datei zu dem Rechengerät zu übertragen.

6. Verfahren (700) nach Anspruch 4, wobei das Übertragen der Software-Image-Datei zu dem Rechengerät Folgendes beinhaltet:
Übertragen der Software-Image-Datei über eine drahtlose Verbindung zu dem Rechengerät.

7. Verfahren (700) nach Anspruch 4, wobei das Übertragen der Software-Image-Datei zu dem Rechengerät Folgendes beinhaltet:
Übertragen der Software-Image-Datei über eine verdrahtete Verbindung zu dem Rechengerät.

8. UE (User Equipment) (120) für drahtlose Kommunikation zum Übertragen einer Firmware-Image-Datei und/oder einer Software-Image-Datei zu einem Rechengerät, wobei das Rechengerät ein Rechengerät mit einer nicht-operativen Bootchain oder ein teilweise nicht-operatives Rechengerät umfasst, das eine gültige Bootchain des Rechengeräts, jedoch kein OS (Operating System) des Rechengeräts laden kann, wobei das UE Folgendes umfasst:
einen Speicher; und
einen oder mehrere Prozessoren, die mit dem Speicher gekoppelt und konfiguriert sind zum:
Herstellen (710) einer Verbindung mit einem Server über ein drahtloses Netzwerk;
Empfangen (720), von dem Server und über die Verbindung über das drahtlose Netzwerk, einer Firmware-Image-Datei zum Durchführen eines Wiederherstellungsvorgangs zum Reparieren oder Neuabbilden der Bootchain und/oder einer Software-Image-Datei zum Durchführen eines Wiederherstellungsvorgangs zum Reparieren oder Neuabbilden des OS; und
Übertragen (730) der Firmware-Image-Datei und/oder der Software-Image-Datei zu einem Rechengerät.

9. UE (120) nach Anspruch 8, wobei die ein oder mehreren Prozessoren zum Herstellen der Verbindung mit dem Server konfiguriert sind zum:
Erhalten eines mit dem Rechengerät assoziierten Authentifizierungszertifikats; und
Authentifizieren des Rechengeräts mit dem Server unter Verwendung des Authentifizierungszertifikats.

10. UE (120) nach Anspruch 9, wobei das Authentifizierungszertifikat in einem mit dem Rechengerät assoziierten Entitätsprofil enthalten ist, das auf dem UE gespeichert ist.

11. UE (120) nach Anspruch 8, wobei der Server einen cloudbasierten Server umfasst; und
wobei die ein oder mehreren Prozessoren zum Herstellen der Verbindung mit dem Server konfiguriert sind zum:
Authentifizieren des UE mit dem Server anhand eines mit dem UE assoziierten Authentifizierungszertifikats.

12. UE (120) nach Anspruch 8, wobei der Server einen lokalen Server umfasst; und
wobei die ein oder mehreren Prozessoren zum Herstellen der Verbindung mit dem Server konfiguriert sind zum:
Herstellen eines sicheren Kanals zwischen dem UE und dem lokalen Server.

13. UE (120) nach Anspruch 12, wobei die ein oder mehreren Prozessoren zum Empfangen der Firmware-Image-Datei und/oder der Software-Image-Datei konfiguriert sind zum:
Empfangen der Firmware-Image-Datei und/oder der Software-Image-Datei über den sicheren Kanal.

14. UE (120) nach Anspruch 12, wobei die ein oder mehreren Prozessoren ferner konfiguriert sind zum:
Herstellen des sicheren Kanals zwischen dem Rechengerät und dem lokalen Server über das UE; und
wobei die ein oder mehreren Prozessoren zum Übertragen der Firmware-Image-Datei und/oder der Software-Image-Datei zu dem Rechengerät konfiguriert sind zum:
Übertragen der Firmware-Image-Datei und/oder der Software-Image-Datei über den sicheren Kanal zu dem Rechengerät.

## Revendications

1. Procédé (700) de communication sans fil réalisé par un équipement utilisateur, UE, pour transmettre au moins un d'un fichier image de micrologiciel ou d'un fichier image de logiciel à un dispositif informatique, le dispositif informatique comprenant un dispositif informatique à chaîne d'amorçage non opérationnelle ou un dispositif informatique partiellement non opérationnel pouvant charger une chaîne d'amorçage valide du dispositif informatique mais pas un système d'exploitation, OS, du dispositif informatique, le procédé comprenant :
l'établissement (710) d'une connexion avec un serveur par le biais d'un réseau sans fil ;
la réception (720), à partir du serveur et par l'intermédiaire de la connexion par le biais du réseau sans fil, d'au moins un d'un fichier image de micrologiciel pour réaliser une opération de récupération afin de réparer ou de réimager la chaîne d'amorçage, ou d'un fichier image de logiciel pour réaliser une opération de récupération afin de réparer ou de réimager l'OS ; et
la transmission (730) d'au moins un du fichier image de micrologiciel ou du fichier image de logiciel au dispositif informatique.

2. Procédé (700) selon la revendication 1, dans lequel le dispositif informatique comprend le dispositif informatique à chaîne d'amorçage non opérationnelle ;
dans lequel la réception d'au moins un du fichier image de micrologiciel ou du fichier image de logiciel comprend :
la réception du fichier image de micrologiciel,
dans lequel le fichier image de micrologiciel comprend un fichier image de chaîne d'amorçage ; et
dans lequel la transmission d'au moins un du fichier image de micrologiciel ou du fichier image de logiciel au dispositif informatique comprend :
la transmission du fichier image de chaîne d'amorçage au dispositif informatique.

3. Procédé (700) selon la revendication 2, comprenant en outre :
la réception, à partir du serveur et par l'intermédiaire de la connexion par le biais du réseau sans fil, du fichier image de logiciel ;et
la transmission du fichier image de logiciel au dispositif informatique après la transmission du fichier image de micrologiciel au dispositif informatique.

4. Procédé (700) selon la revendication 1, dans lequel le dispositif informatique comprend le dispositif informatique partiellement non opérationnel capable de charger une chaîne d'amorçage valide du dispositif informatique mais pas un système d'exploitation, OS, du dispositif informatique ;
dans lequel la réception d'au moins un du fichier image de micrologiciel ou du fichier image de logiciel comprend :
la réception du fichier image de logiciel,
dans lequel le fichier image de logiciel comprend un fichier image de l'OS ; et
dans lequel la transmission d'au moins un du fichier image de micrologiciel ou du fichier image de logiciel au dispositif informatique comprend :
la transmission du fichier image de logiciel au dispositif informatique.

5. Procédé (700) selon la revendication 4, dans lequel la transmission du fichier image de logiciel au dispositif informatique comprend :
la communication avec la chaîne d'amorçage du dispositif informatique pour transmettre le fichier image de logiciel au dispositif informatique.

6. Procédé (700) selon la revendication 4, dans lequel la transmission du fichier image de logiciel au dispositif informatique comprend :
la transmission, par l'intermédiaire d'une connexion sans fil, du fichier image de logiciel au dispositif informatique.

7. Procédé (700) selon la revendication 4, dans lequel la transmission du fichier image de logiciel au dispositif informatique comprend :
la transmission, par l'intermédiaire d'une connexion filaire, du fichier image de logiciel au dispositif informatique.

8. Équipement utilisateur, UE, (120) de communication sans fil pour transmettre au moins un d'un fichier image de micrologiciel ou d'un fichier image de logiciel à un dispositif informatique, le dispositif informatique comprenant un dispositif informatique ayant une chaîne d'amorçage non opérationnelle ou un dispositif partiellement non opérationnel capable de charger une chaîne d'amorçage valide du dispositif mais pas un système d'exploitation, OS, du dispositif informatique, l'UE comprenant :
une mémoire ;et
un ou plusieurs processeurs, couplés à la mémoire, configurés pour :
établir (710) une connexion avec un serveur par le biais d'un réseau sans fil ;
recevoir (720), à partir du serveur et par l'intermédiaire de la connexion par le biais du réseau sans fil, au moins un d'un fichier image de micrologiciel pour réaliser une opération de récupération afin de réparer ou de réimager la chaîne d'amorçage, ou d'un fichier image de logiciel pour réaliser une opération de récupération afin de réparer ou de réimager l'OS ;et
transmettre (730) au moins un du fichier image de micrologiciel ou du fichier programme de logiciel à un dispositif informatique.

9. UE (120) selon la revendication 8, dans lequel les un ou plusieurs processeurs, pour établir la connexion avec le serveur, sont configurés pour :
obtenir un certificat d'authentification associé au dispositif informatique ;et
authentifier le dispositif informatique auprès du serveur à l'aide du certificat d'authentification.

10. UE (120) selon la revendication 9, dans lequel le certificat d'authentification est inclus dans un profil d'entité, associé au dispositif informatique, qui est stocké sur l'UE.

11. UE (120) selon la revendication 8, dans lequel le serveur comprend un serveur basé sur le nuage ; et
dans lequel les un ou plusieurs processeurs, pour établir la connexion avec le serveur, sont configurés pour :
authentifier l'UE auprès du serveur à l'aide d'un certificat d'authentification associé à l'UE.

12. UE (120) selon la revendication 8, dans lequel le serveur comprend un serveur sur site ; et
dans lequel les un ou plusieurs processeurs, pour établir la connexion avec le serveur, sont configurés pour :
établir un canal sécurisé entre l'UE et le serveur sur site.

13. UE (120) selon la revendication 12, dans lequel les un ou plusieurs processeurs, pour recevoir au moins un du fichier image de micrologiciel ou du fichier image de logiciel, sont configurés pour :
recevoir au moins un du fichier image de micrologiciel ou du fichier image de logiciel par le biais du canal sécurisé.

14. UE (120) selon la revendication 12, dans lequel les un ou plusieurs processeurs sont configurés en outre pour :
établir le canal sécurisé entre le dispositif informatique et le serveur sur site par l'intermédiaire de l'UE ; et
dans lequel les un ou plusieurs processeurs, pour transmettre au moins un du fichier image de micrologiciel ou du fichier image de logiciel au dispositif informatique, sont configurés pour :
transmettre au moins un du fichier image de micrologiciel ou du fichier image de logiciel au dispositif informatique par le biais du canal sécurisé.
